**Europäisches Patentamt**

**European Patent Office**

**Office européen des brevets**

(19)

(11) Veröffentlichungsnummer : **0 388 622 B1**

(12) # EUROPÄISCHE PATENTSCHRIFT

(45) Veröffentlichungstag der Patentschrift :
17.06.92 Patentblatt 92/25

(51) Int. Cl.⁵ : **G01L 9/14**

(21) Anmeldenummer : **90102560.1**

(22) Anmeldetag : **09.02.90**

(54) **Drucktransmitter.**

(30) Priorität : **06.03.89 CH 818/89**

(43) Veröffentlichungstag der Anmeldung :
**26.09.90 Patentblatt 90/39**

(45) Bekanntmachung des Hinweises auf die
Patenterteilung :
**17.06.92 Patentblatt 92/25**

(84) Benannte Vertragsstaaten :
**AT BE CH DE DK ES FR GB GR IT LI LU NL SE**

(56) Entgegenhaltungen :
**DE-A- 3 104 379**
**US-A- 4 745 811**

(73) Patentinhaber : **HUBA CONTROL AG**
**Industriestrasse 17**
**CH-8116 Würenlos (CH)**

(72) Erfinder : **Brinkhaus, Bernhard**
**Baumgartenstrasse 11**
**CH-8122 Pfaffhausen (CH)**

(74) Vertreter : **Patentanwälte Schaad, Balass &**
**Partner**
**Dufourstrasse 101 Postfach**
**CH-8034 Zürich (CH)**

Jouve, 18, rue Saint-Denis, 75001 PARIS

EP 0 388 622 B1

## Beschreibung

Die vorliegende Erfindung betrifft einen Drucktransmitter gemäss dem Oberbegriff des Patentanspruches 1.

Sozusagen alle bekannten Transmitter haben eines gemeinsam: Die physikalische Grösse "Druck" wird in einen physikalisch erfassbaren "Weg" umgewandelt und die Messung des "Weges" führt zu einem entsprechenden elektrischen Spannungssignal bzw. Stromsignal.

Nachteilig an den bekannten Drucktransmittern der eingangs genannten Art ist vor allem die physikalisch bedingte Nichtlinearität zwischen dem Druckwert einerseits und dem Wert des elektrischen Signals. Dazu trägt zunächst die mangelnde Linearität zwischen dem Druckwert und dem durch den Druck bewirkten Weg bei, aber auch die physikalisch bedingte Nichtlinearität zwischen der Hall-Spannung und dem erfassten Weg, d.h. dem nichtlinearen Zusammenhang zwischen Magnetkraft und Weg.

Es ist daher als eine Aufgabe der Erfindung anzusehen, einen Drucktransmitter der eingangs genannten Art zu schaffen, bei dem die Linearität zwischen dem Wert des Druckes und dem Wert des elektrischen Spannungssignals herstellbar ist, so dass individuelle Abgleichmöglichkeiten für die Linearität des Drucktransmitters erreicht werden können und ein grösserer Wegbereich zwischen der Hall-Sonde und dem Permanentmagneten linear erfassbar ist.

Diese Aufgabe wird beim vorgeschlagenen Drucktransmitter dadurch gelöst, dass er die im Kennzeichen des Patentanspruches 1 angegebenen Merkmale aufweist.

Ein Funktionsnetzwerk ist eine Schaltung, mit der sich - einfach gesagt - Charakteristiken von Eingangsspannungen auf bestimmte, gegebenenfalls einstellbare Weise verändern lassen. Insbesondere ist ein Sinus-Cosinus-Funktionswerk eine Schaltung, die den Sinus oder Cosinus der Eingangsspannung approximiert. Es sei in diesem Zusammenhang beispielsweise auf folgende Literaturstelle hingewiesen: U. Tietze, Ch. Schenk: "Halbleiter-Schaltungstechnik", Springer-Verlag, 1983, S; 323 ff: Untertitel "12.7.4" "Sinus- und Konsinusfunktion".

Die Erfindung ist nachstehend rein beispielsweise anhand der Zeichnung näher beschrieben. Es zeigt:

Fig. 1 sehr schematisch ein Ausführungsbeispiel des Drucktransmitters gemäss der Erfindung;

Fig. 2 eine graphische Darstellung um die Abhängigkeit der Hall-Spannung vom Druck, der auf einen Drucktransmitter einwirkt, zu zeigen; und

Fig. 3 ein vereinfachtes Schema eines Sinus-Funktionsnetzwerkes.

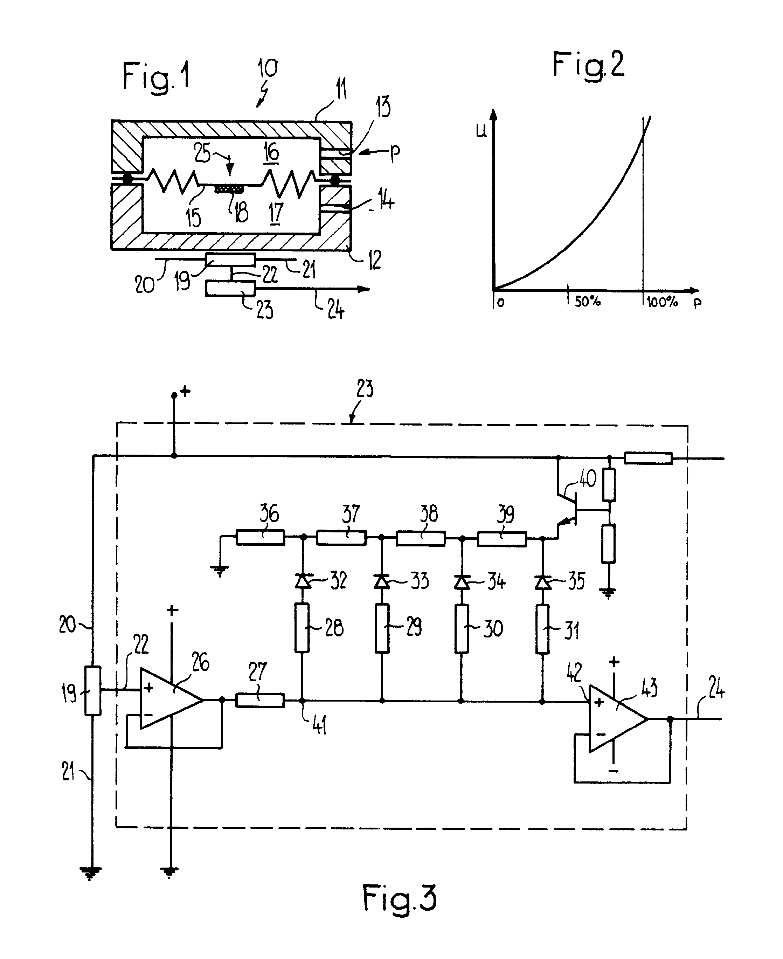

Der in Fig. 1 dargestellte Drucktransmitter 10 besitzt die Form einer durch zwei schalenförmige Gehäuseteile 11,12 mit je einem Durchlass 13 bzw. 14 begrenzten Druckmessdose. Der Innenraum dieser Druckmessdore ist durch eine dicht zwischen den Gehäuseteilen 11,12 eingeklemmte Membrane 15 in zwei Kammern 16,17 aufgeteilt. Nicht dargestellt, da in vorliegendem Falle nicht von Bedeutung, sind allenfalls vorhandene Federelemente und diesen zugeordnete Einstellelemente, um die Membrane 15 in der einen oder anderen Richtung vorzuspannen. An der Membrane 15 ist ein Permanentmagnet 18 befestigt. Der Permanentmagnet 18 wirkt durch das aus einem nichtmagnetischen Material bestehende Gehäuseteil 12 hindurch auf eine Hall-Sonde 19 ein. Die Anschlüsse, die die Hall-Sonde 19 mit einem Gleichstrom versorgen, sind mit 20 und 21 bezeichnet. Die Elektrode, an der die Hall-Spannung ansteht, ist mit 22 bezeichnet. An die Elektrode 22 ist ein Sinus-Funktionsnetzwerk 23 angeschlossen, an dessen Ausgang 24 die lineare druckproportionale Hall-Spannung abgreifbar ist.

Wird dem Drucktransmitter 10 über den Durchlass 13 ein fliessfähiges Medium unter einem Druck p zugeführt, wird auf die Membrane 15 eine Kraft in Richtung des Pfeiles 25 ausgeübt. Die Membrane 15 wird in Fig. 1 nach unten ausgelenkt, so dass der Abstand zwischen dem Permanentmagneten 18 und der Hall-Sonde 19 sich vermindert. Damit erhöht sich die auf die Hall-Sonde 19 einwirkende magnetische Flussdichte und - bei einer konstanten Gleichstromversorgung der Hall-Sonde 19 über die Anschlüsse 20,21 vorausgesetzt - es erhöht sich auch die an der Hall-Elektrode 22 abgreifbare Spannung.

In Fig. 2 ist in willkürlichen Einheiten der Verlauf der an der Hall-Elektrode 22 abgreifbaren Hall-Spannung in Abhängigkeit des Druckes p aufgetragen. Man erkennt, dass zwischen dem Druck p und der Hallspannung U kein linearer Zusammenhang existiert.

Dieser lineare Zusammenhang wird durch das Sinus-Funktionsnetzwerk 23 hergestellt.

Das Sinus-Funktionsnetzwerk 23 ist schematisch in Fig. 3 dargestellt. Man erkennt die über die Anschlüsse 20,21 zwischen einer positiven Stromquelle und Masse geschaltete Hall-Sonde 19 und die Hall-Elektrode 22. Diese führt an einen Eingangsverstärker 26. Der Ausgang des Eingangsverstärkers ist über einen Widerstand 27 parallel mit einer Reihe von in Serie zueinander geschalteten Widerständen und Dioden verbunden. Die den Dioden zugeordneten Widerstände sind mit 28 bis 31 bezeichnet und die Dioden selbst mit 32 bis 35. Ausgangsseitig sind die Dioden 32 bis 35 an je einen Abgriff eines aus vier Widerständen 36 bis 39 bestehenden Spannungsteilers angeschlossen, der einerends an Masse liegt und andernends über einen Transistor 40 an einer Gleichspannung liegt.

Damit sind die Dioden 32 bis 35 je mit einer (in Fig. 3 von links nach rechts gesehen) steigenden Spannung vorgespannt. Der Widerstand 27 bildet mit dem Widerstand 28 einen Spannungsteiler. Steigt nun die Spannung am Ausgang des Verstärkers 26 und damit auch am Schaltpunkt 41 zwischen den Widerständen 27 und 28 über die Vorspannung der Diode 32 an, wird diese leitend und führt einen Teil der Spannung ab. Der an den Ausgang des Verstärkers 26 folgende Spannungsteiler ist nun durch den Widerstand 27 und die Parallelschaltung der Widerstände 28 und 29 gebildet. Bei weiterem Anstieg der Spannung wird auch die Diode 33 leitend. Dasselbe wiederholt sich beim weiteren Anstieg der Spannung mit den Dioden 34 und 35. Man sieht, dass damit in Abhängigkeit des Wertes der Spannung am Ausgang des Eingangverstärkers 26 ein Inkrement dieser Spannung zu einem immer geringeren Inkrement am Eingang 42 eines Ausgangsverstärkers 43 führt. Damit lässt sich die exponentielle Spannungscharakteristik der Hall-Sonde (Fig. 2) kompensieren, so dass am Ausgang 24 des Sinus-Funktionsnetzwerkes 23 eine Spannung ansteht, die in einer linearen Abhängigkeit von dem auf die Membrane 15 einwirkenden Druck p steht.

Die Werte der Widerstände 36 bis 39 (und gegebenenfalls 28 bis 31) hängen von der mechanischen Ansprechcharakteristik einerseits des Drucktransmitters 10 und andererseits von der elektrischen Ansprechcharakteristik der Hall-Sonde 19 ab. Kennt man diese Charakteristiken und lassen sich diese Charakteristiken in der Seriefertigung der Elemente des Drucktransmitters 10 einigermassen konstant halten, können die Widerstände 36 bis 39 (und die Widerstände 28 bis 31) mit einem konstanten Wert benutzt werden. Kennt man aber diese Charakteristiken nicht, oder sind sie in der Serie nicht reproduzierbar, können alle oder einzelne der Widerstände 36 bis 39 (sowie gegebenenfalls 28 bis 31) durch einstellbare Widerstände ersetzt werden, so dass fallweise ein individueller Abgleich erfolgen kann.

Ebenso ist es möglich, falls erforderlich, dem Sinus-Funktionsnetzwerk 23 nachfolgend eine Schaltung zur Temperaturkompensation vorzusehen.

## Patentansprüche

1. Drucktransmitter mit einem Permanentmagneten (18) und einer mit diesem zusammenwirkenden Hall-Sonde (19), wobei der Abstand zwischen dem Permanentmagneten (18) und der Hall-Sonde (19) durch ein durch Druck beaufschlagbares Element (15) veränderbar ist und die Hall-Elektroden der Hall-Sonde eine für diesen Abstand charakteristische Spannung abzugeben in der Lage sind, dadurch gekennzeichnet, dass zur Linearisierung der Spannung bezüglich des Druckes der Hall-Sonde (19) ein Sinus-Cosinus-Funktions-netzwerk (23) nachgeschaltet ist.

2. Drucktransmitter nach Patentanspruch 1, bei dem der Permanentmagnet (18) an dem durch Druck beaufschlagten Element (15) befestigt ist, dadurch gekennzeichnet, dass die ortsfest angeordnete Hall-Sonde (19) mit dem Sinus-Cosinus-Funktionsnetzwerk (23) zu einer Einheit zusammengebaut ist.

3. Drucktransmitter nach einem der Ansprüche 1 oder 2, dadurch gekennzeichnet, dass das Sinus-Cosinus-Funktionsnetzwerk (23) für unipolare Spannungen ausgebildet ist.

## Claims

1. Pressure transmitter having a permanent magnet (18) and a Hall probe (19) interacting therewith, it being possible for the distance between permanent magnet (18) and the Hall probe (19) to be varied by means of an element (15) to which pressure can be applied, and the Hall electrodes of the Hall probe being capable of supplying a voltage characteristic of this distance, characterised in that a sine-cosine functional network (23) is connected downstream for the purpose of linearising the voltage with respect to the pressure of the Hall probe (19).

2. Pressure transmitter according to Patent Claim 1, in which the permanent magnet (18) is mounted on the element (15) to which pressure is applied, characterised in that the Hall probe (19), which is arranged fixed, is assembled to form a unit with the sine-cosine functional network (23).

3. Pressure transmitter according to one of Claims 1 or 2, characterised in that the sine-cosine functional network (23) is designed for unipolar voltages.

## Revendications

1. Transmetteur de pression, comprenant un aimant permanent (18) et une sonde de Hall (19) coopérant avec celui-ci, l'écartement entre l'aimant permanent (18) et la sonde de Hall (19) pouvant être varié par un élément (15) qui peut être soumis à la pression et les électrodes de hall de la sonde de Hall étant en mesure de fournir une tension caractéristique pour cet écartement, **caractérisé en ce** que pour la linéarisation de la tension en fonction de la pression, un réseau de fonction sinus-cosinus (23) est monté en aval de la sonde de Hall (19).

2. Transmetteur de pression selon la revendication 1, dans lequel l'aimant permanent (18) est fixé sur l'élément (15) sollicité par la pression, caractérisé en ce que la sonde de Hall (19) montée de manière stationnaire constitue une unité avec le réseau de fonction sinus-cosinus (23).

3. Transmetteur de pression selon l'une des revendications 1 ou 2, caractérisé en ce que le réseau de fonction sinus-cosinus (23) est conformé pour des tensions unipolaires.

EP 0 388 622 B1

Fig.1

Fig.2

Fig.3

5